# EUROPEAN PATENT APPLICATION

(11) **EP 1 049 329 A2**
(43) Date of publication of application: **02.11.2000**
(21) Application number: 00303534.2
(22) Date of filing: 27.04.2000
(51) Int. Cl.: H04N 5/445

(54) **Broadcast program display apparatus using electronic program guide**

(30) Priority: 28.04.1999 JP 12180399
(71) Applicant: SONY CORPORATION, Tokyo 141 (JP)
(72) Inventor: Sato, Masahiko, c/o Intel. Prop. Dpt., Tokyo 141 (JP)
(74) Representative: Turner, James Arthur

(57) **Abstract**

A broadcast program display apparatus is provided in which ease of operation of selecting a broadcast program is improved by detecting, using EPG data, that a broadcast program which is being currently broadcast has been changed and by displaying new broadcast program information. The broadcast program display apparatus using an EPG includes: a tuner section for receiving a broadcast program containing broadcast program information; an EPG decoder section for decoding the broadcast program information received by the tuner section; and a controller for understanding the contents of the decoded EPG data, wherein the controller compares the current time with a broadcast program start time contained in the EPG data and comprises a display device for displaying the broadcast program information of the EPG data when a broadcast program which is being currently broadcast is changed or at around the time of the change.

## Description

The present invention relates to a broadcast program display apparatus using an EPG (Electronic Program Guide).

Conventionally, in media which provide a large number of programs, such as digital satellite broadcasts, FM multiplex broadcasts, or the Internet, an EPG has been introduced to improve the convenience of selecting a broadcast program. For example, in a digital satellite broadcast, broadcast program information which is transmitted, such as a channel number, a program name, a schedule, etc., is decoded by an EPG decoder in a receiver, and the decoded EPG data is displayed on a television monitor (on-screen display). In order to produce this on-screen display, it is well known that a user may operate a remote control unit, etc., which is dedicated to the EPG, so as to produce the display.

However, as described in the conventional art, a conventional technique of producing an on-screen display of broadcast program information by a user operating a remote control unit has problems such as that described below. For example, in a case in which when a broadcast program which is currently being viewed is terminated, it is desired to view the next desired broadcast program, a remote control operation must be performed to select the broadcast program from among a large number of broadcast programs, and the greater the number of broadcast programs are, the more complicated the operation becomes.

Various respective aspects of the invention are defined in the appended claims.

Embodiments of the present invention can provide a broadcast program display apparatus in which when a broadcast program is changed or at around the time of the change, desired broadcast program information can be displayed automatically.

According to the present invention, there is provided a broadcast program display apparatus using an EPG, comprising: a tuner section for receiving a broadcast program containing broadcast program information; an EPG decoder section for decoding the broadcast program information received by the tuner section; and a controller for understanding the contents of the decoded EPG data, wherein the controller compares the current time with a broadcast program start time contained in the EPG data and comprises display means for displaying the broadcast program information of the EPG data when a broadcast program which is being currently broadcast is changed or immediately after it is changed.

The display means may be an on-screen display. The EPG decoder can accept broadcast program information directly from the outside. The current time is produced from time information received from the outside.

In a manner as described above, as a result of displaying broadcast program information at each time when the current broadcast program is changed, it is possible to simplify the operation of selecting a broadcast program using a remote control unit, etc., thereby improving the ease of operation of selecting a broadcast program.

The invention will now be described by way of example with reference to the accompanying drawings, throughout which like parts are referred to by like references, and in which:
Fig. 1 is a block diagram of a broadcast program display apparatus using an EPG according to a first embodiment of the present invention;
Fig. 2 is a flowchart showing a part of the operation of a controller which is a constituent of the display apparatus;
Fig. 3 is a block diagram of a broadcast program display apparatus using an EPG according to a second embodiment of the present invention;
Fig. 4 is a block diagram of a broadcast program display apparatus using an EPG according to a third embodiment of the present invention; and
Fig. 5 is a block diagram of a broadcast program display apparatus using an EPG according to a fourth embodiment of the present invention.

Various embodiments of a broadcast program display apparatus using an EPG according to the present invention are described below with reference to the accompanying drawings.

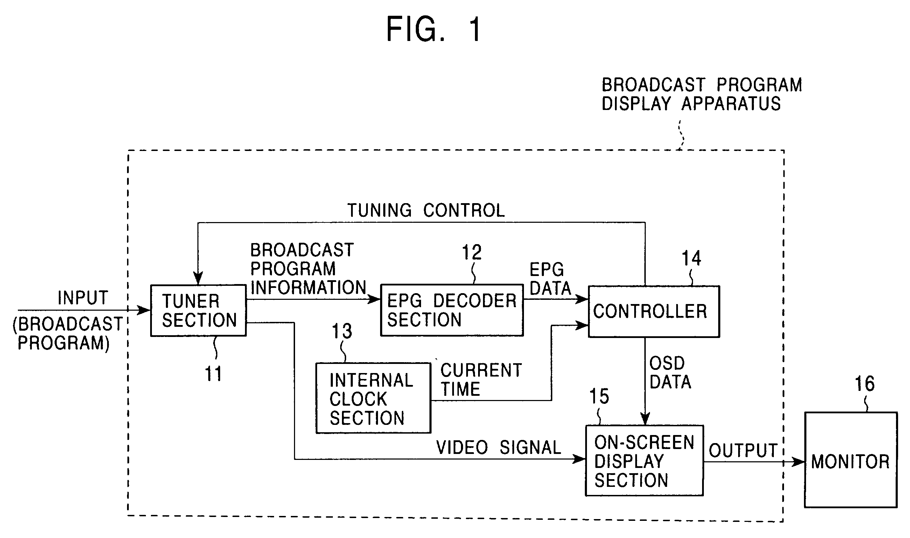

As shown in Fig. 1, a broadcast program display apparatus using an EPG according to a first embodiment comprises a tuner section 11 for receiving a broadcast program containing broadcast program information, an EPG decoder section 12 for decoding the broadcast program information in the signal received by the tuner section 11, an internal clock section 13 for outputting the current time, a controller 14 for performing control so that a broadcast program start time contained in the decoded EPG data is compared with the current time, and broadcast program information is displayed when the broadcast program is changed or at around the time of the change, and an on-screen display section 15 for superimposing the broadcast program information contained in the EPG data onto a video signal and displaying it (on-screen display).

In such a construction, the EPG decoder section 12 decodes the broadcast program information in order to create EPG data. This EPG data comprises broadcast program information which broadly comprises the current time, a receiving channel, a broadcasting station name, a broadcasting time, and a program title of the broadcast program which is to be broadcast at this broadcasting time. Also, this EPG data may be text data which has been edited so as to have a correlation between the broadcasting time and the program title.

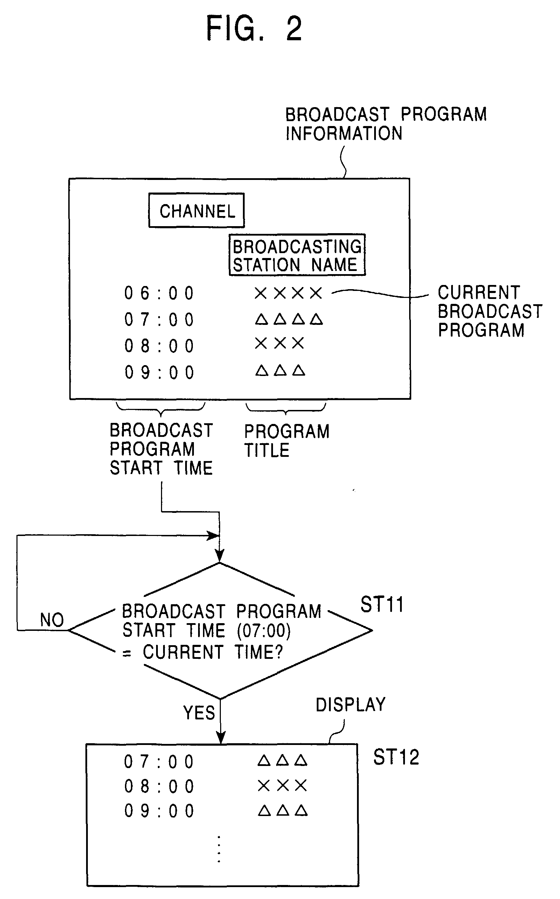

As shown in Fig. 2, the controller 14 extracts a broadcasting time from the broadcast program information of the EPG and compares the broadcasting time with the current time (step ST11). It may be assumed that this comparison produces a match when the times coincide or when the broadcasting time is slightly early or slightly late. For example, if they match slightly after the broadcasting time, it is possible to view the program title of the next broadcast program in accordance with the progress of the current broadcast program, making it possible to view from the beginning continuously to the program which is being currently broadcast by a selection operation. If they match each other, at least the broadcasting time and the program title, are superimposed onto the video signal and are on-screen displayed on the monitor 16 (step ST12).

The genre or the desired genre of the broadcast programs which are displayed as a result of a match of these times may be determined in advance, or broadcast programs of the genre of the current broadcast program may be extracted and displayed. As a result of the above, it is possible to automatically extract and display a desired broadcast program from among a large number of broadcast programs, thereby improving the ease of selecting a broadcast program.

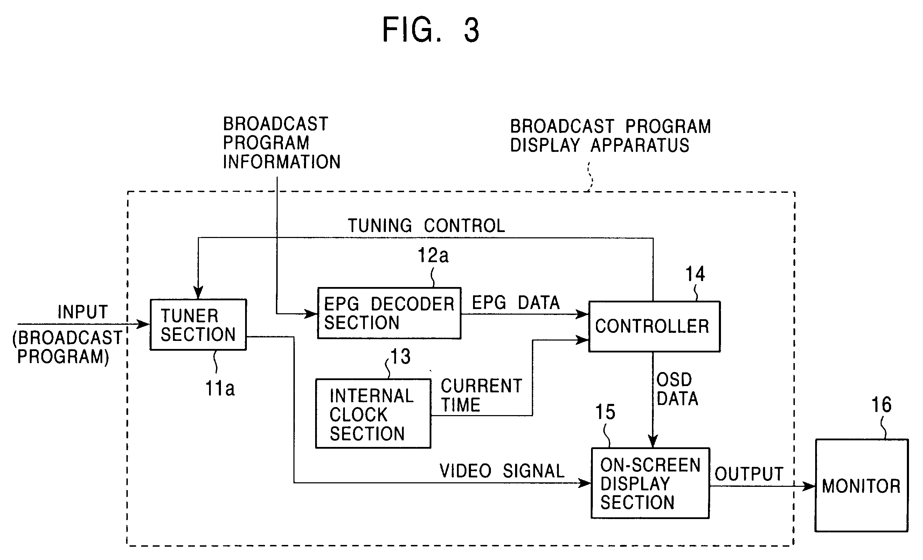

A broadcast program display apparatus using an EPG according to a second embodiment aims to receive broadcast program information from the outside, for example, from the Internet, as shown in Fig. 3. The broadcast program display apparatus of this embodiment comprises a tuner section 11a for receiving a broadcast program, an EPG decoder section 12a for directly receiving broadcast program information by using the Internet, etc., and for decoding it, an internal clock section 13 for outputting current time information, a controller 14 for performing control so that the time of the broadcast program contained in the EPG data decoded by the EPG decoder section 12a is compared with the current time and the broadcast program information is displayed when the broadcast program is changed or at around the time of the change, and an on-screen display section 15 for superimposing the broadcast program information onto the video signal and for displaying it.

In such a construction, the controller 14 decodes broadcast program information input via the Internet, etc., in order to produce EPG data. Then, in a manner similar to that described in the first embodiment, the broadcast start time contained in the EPG data is compared with the current time. If the broadcast program start time coincides with current time or is near to it, it is assumed that the comparison produces a match, and a new broadcast program which is reserved is entered into the display management information.

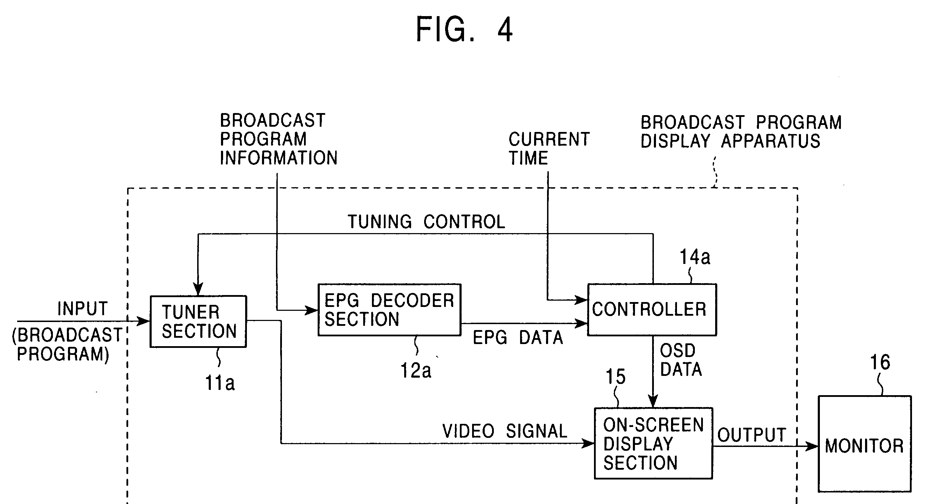

A broadcast program display apparatus using an EPG according to a third embodiment, as shown in Fig. 4, aims to directly receive EPG data from the Internet, etc., and also to receive the current time information from the outside. The broadcast program display apparatus of this embodiment comprises a tuner section 11a for receiving a broadcast program, an EPG decoder section 12a for receiving and decoding broadcast program information from the Internet, etc., a controller 14a for performing control such that the input of the current time information is compared with the broadcast program start time of the EPG data from the tuner section 11 and the EPG decoder section 12a, and the internal current time, and when the broadcast program is changed or at around the time of the change, the broadcast program information is displayed, and an on-screen display section 15 for superimposing the extracted broadcast program information onto a video signal and displaying it.

In such a construction, the EPG decoder section 12a decodes the broadcast program information input from the Internet, etc., in order to produce EPG data. Then, in a manner similar to that described in the first embodiment, the broadcast program start time contained in the EPG data is compared with the internal current time obtained from the outside. If the internal current time coincides with the broadcast program start time or is around the start time, it is assumed that the comparison produces a match, and at least a channel number, a broadcasting time, and a title of the broadcast program are on-screen displayed on the monitor 16.

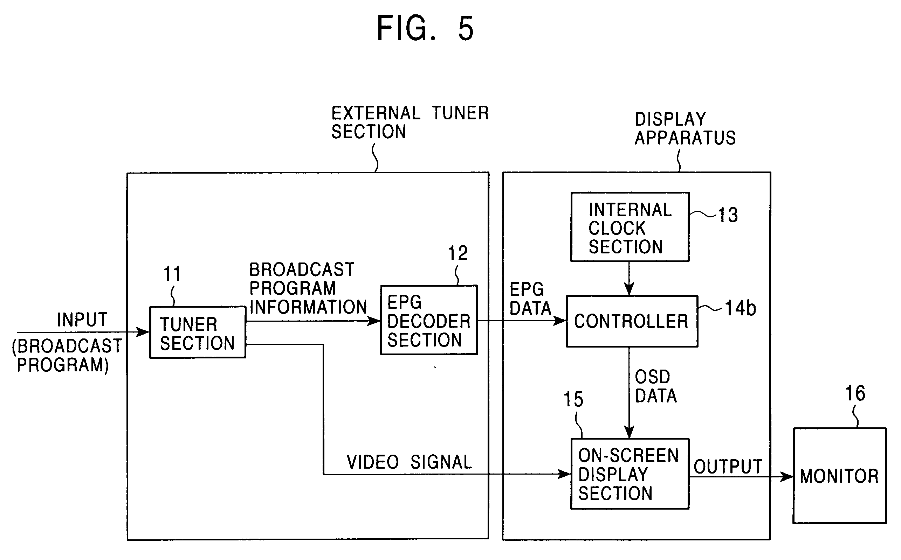

A broadcast program display apparatus using an EPG according to a fourth embodiment, as shown in Fig. 5, is constructed in such a way that an external tuner for receiving a broadcast program containing broadcast program information and a display apparatus for performing a display are separated from each other. That is, the external tuner section comprises a tuner section 11 for receiving a broadcast program containing broadcast program information, and an EPG decoder section 12 for decoding the broadcast program information received by the tuner section 11. The display apparatus comprises a controller 14b for receiving the EPG data decoded by the EPG decoder section 12 of the external tuner section, an internal clock section 13 for outputting the current time information, and an on-screen display apparatus 15 for superimposing the broadcast program information contained in the EPG data onto a video signal and for displaying it.

In such a construction, first, the external tuner section receives broadcast program information in order to create EPG data. In a manner similar to that described in the first embodiment, the controller 14b on the display apparatus side compares the broadcast program start time contained in the EPG data with the internal current time. If the broadcast program start time coincides with the internal current time or is around the start time, the comparison is assumed to be a match, and at least a channel number, a broadcasting time, and a title of the broadcast program in the broadcast program information contained in the EPG data are on-screen displayed on the monitor 16.

As has thus been described, in the broadcast program display apparatus using EPG according to the present invention, by comparing the current time with a broadcast program start time contained in EPG data, a desired broadcast program is displayed when the broadcast program which is being currently broadcast is to be changed or at around the time of the change. Thus, there is an advantage in that the contents of a new broadcast program can be known even if an operation of selecting a broadcast program by using a remote control unit, etc., is not performed, and the ease of operation in selecting a broadcast program, even if there are a large number of broadcast programs, can be improved.

Many different embodiments of the present invention may be constructed without departing from the spirit and scope of the present invention. It should be understood that the present invention is not limited to the specific embodiments described in this specification. To the contrary, the present invention is intended to cover various modifications and equivalent arrangements included within the scope of the invention as hereafter claimed. The scope of the following claims is to be accorded the broadest interpretation so as to encompass all such modifications, equivalent structures and functions.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A broadcast program display apparatus using an EPG, comprising:
a tuner section for receiving a broadcast program containing broadcast program information;
an EPG decoder section for decoding the broadcast program information received by the tuner section; and
a controller for understanding the contents of said decoded EPG data,
wherein said controller comprises display means for comparing the current time with a broadcast program start time contained in said EPG data and for displaying the broadcast program information of said EPG data when a broadcast program which is being currently broadcast is changed or immediately after it is changed.

2. A broadcast program display apparatus using an EPG according to claim 1, wherein said display means is an on-screen display.

3. A broadcast program display apparatus using an EPG according to claim 1, wherein said EPG decoder directly receives broadcast program information from the outside.

4. A broadcast program display apparatus using an EPG according to claim 1, wherein said current time is produced by time information received from the outside.
